Europäisches Patentamt

European Patent Office

Office européen des brevets

(11) Veröffentlichungsnummer: **0 304 826**
**A2**

## EUROPÄISCHE PATENTANMELDUNG

(21) Anmeldenummer: **88113537.0**

(22) Anmeldetag: **20.08.88**

(51) Int. Cl.4: **F16N 39/06**

(30) Priorität: **27.08.87 DE 3728607**

(43) Veröffentlichungstag der Anmeldung:
**01.03.89 Patentblatt 89/09**

(84) Benannte Vertragsstaaten:
**DE ES FR GB SE**

(71) Anmelder: **Krupp MaK Maschinenbau GmbH**
**Falckensteiner Strasse 2-4**
**D-2300 Kiel 17(DE)**

(72) Erfinder: **Wetzel, Stefan, Dipl.-Ing.**
**Hardenbergstrasse 4**
**D-2300 Kiel 1(DE)**

(74) Vertreter: **Hansmann, Dierk, Dipl.-Ing.**
**Jessenstrasse 4**
**D-2000 Hamburg 50(DE)**

(54) **Vorrichtung zur Separierung von Schmieröl.**

(57) Es ist vorgesehen, in einen Separationskreislauf zusätzlich einen Rekuperativ-Wärmetauscher dem Vorwärmer vorzuschalten. Hierbei wird das erwärmte separierte Schmieröl nach Durchlauf durch den Separator und vor Rückführung in den Umlauftank zum Betreiben des Rekuperativ-Wärmetauschers eingesetzt. Zum Anfahren wird das Schmieröl in einem separat schaltbaren Kreis erwärmt.

x TEMPERATURABHAENGIG UMSCHALTENDE 3-WEGE ARMATUREN:
ANWAERMBETRIEB: 2/3
SEPARIERBETRIEB 1/2

SLUDGE

EP 0 304 826 A2

### Vorrichtung zur Separierung von Schmieröl

Die Erfindung bezieht sich auf eine Vorrichtung zur Separierung von Schmieröl für Motoranlagen relativ großer Leistung, wobei ein Separator parallel zum Motor angeordnet und das Schmieröl aus einem Umlauftank über einen Vorwärmer zur Einstellung einer Separationstemperatur dem Separator und anschließend dem Umlauftank wieder zuführbar ist.

Gerade bei mit Schweröl betriebenen Dieselmotoren ist eine effektive Aufbereitung des Schmieröls von herausragender Bedeutung. Zur Pflege des Schmieröls werden deshalb Filter mit möglichst kleinen Maschenweiten im Hauptstrom eingesetzt, die die Motoren vor im Schmieröl enthaltenen Partikeln schützen. Allerdings ist eine ausreichende Reinigung des Schmieröls so mit wirtschaftlich vertretbaren Mitteln nicht zu erreichen. Deshalb werden Separatoren parallel zum Motor geschaltet, die aus dem Schmierölumlauftank saugen und nach der Reinigung das Öl dorthin wieder zurückfördern.

Die Separierung ist um so effektvoller, je dünnflüssiger das Öl ist. Also ist eine Vorwärmung von einer Umlauftanktemperatur auf eine Separationstemperatur notwendig. Um hierbei ein Verdampfen von Wasser zu vermeiden und andererseits möglichst dünnflüssiges Öl zu erhalten, ist eine Separationstemperatur von 95 bis 98 Grad C anzustreben.

Nach der Separierung wird das Schmieröl in bekannter Weise in den Umlauftank mit einer Temperatur, die kaum unter der Separationstemperatur liegt und für den Motorbetrieb viel zu hoch ist, zurückgepumpt. Die Wärmemenge der Vorwärmung muß also an ein Kühlsystem abgegeben werden.

Die Aufgabe der Erfindung ist es, eine einfache gattungsgemäße Vorrichtung zu schaffen, die eine gute Ausnutzung der eingesetzten Energie ermöglicht und die Wärmemenge zur Vorwärmung vor Rückführung in den Umlauftank ausnutzt.

Die Lösung dieser Aufgabe erfolgt erfindungsgemäß dadurch, daß dem Vorwärmer ein Rekuperativ-Wärmetauscher vorgeschaltet ist, der durch das erwärmte separierte Schmieröl nach Durchlauf durch den Separator und vor Rückführung in den Umlauftank betreibbar ist.

Hierdurch wird eine gute Energiebilanz geschaffen, und es werden die Verluste einer Anordnung herabgesetzt.

Eine günstige Ausbildung für die Inbetriebnahme der Vorrichtung besteht darin, daß die Eintritts- und Austrittsseite des Separators unter Einbeziehung mindestens des Vorwärmers über eine Bypassleitung mittels Drei-Wege-Ventile als geschlossener Kreis zur Aufwärmung auf Separationstemperatur abtrennbar ist.

Zur einfachen Ausbildung einer Vorrichtung wird vorgeschlagen, daß der Vorwärmer als elektrisch betriebener Erhitzer ausgebildet ist.

Alternativ ist vorgesehen, den Vorwärmer als dampfbeheizter, thermalölbeheizter oder heißwasserbeheizter Erhitzer auszubilden.

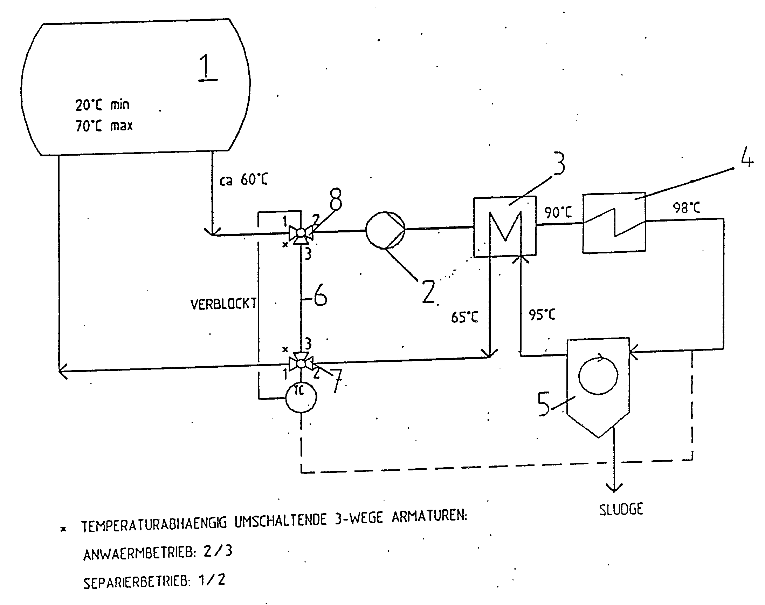

In der Zeichnung ist eine schematische Darstellung einer Schaltung dargestellt.

Das zu separierende Öl wird aus einem Umlauftank 1 druch eine Pumpe 2 über einen Rekuperativ-Wärmetauscher 3 und einen zusätzlichen Vorwärmer 4 zu einem Separator 5 geführt. Anschließend wird das separierte Öl als Arbeitsmedium durch den Rekuperativ-Vorwärmer 3 geführt und gelangt dann wieder in den Umlauftank 1.

Im normalen Betrieb kommt das Öl mit etwa 60 Grad C aus dem Umlauftank 1 und erwärmt sich in dem RekuperativWärmetauscher 3 auf 90 Grad C. Im folgenden Vorwärmer 4, beispielsweise als Elektroerhitzer, wird das Öl von 90 auf 98 Grad C erwärmt und danach im Separator 5 separiert. Nach der Separierung durchströmt es dann den Rekuperativ-Wärmetauscher 3 - diesmal als Arbeitsmedium - und erhitzt das neu einströmende Öl von 60 auf 90 Grad C, indem es sich von ungefähr 95 auf 65 Grad C abkühlt. Der auftretende Verlust ist also nur noch die Strahlungswärme und die durch die Grädigkeit des Rekuperativ-Wärmetauschers 3 verlorene Energie, die etwa insgesamt einer Temperaturdifferenz von 8 Grad C entspricht. Bei einer konventionellen Anlage wären es dagegen 38 Grad C.

Für das Anfahrverhalten ist es zweckmäßig, den Vorwärmer 4 so auszulegen, daß die gesamte Erwärmung durchführbar ist, da durch das kalte Öl die Rekuperation nicht einsetzen kann. In der Betriebsphase reichen etwa 10 % der Anfahrleistung des Vorwärmers 4.

Für die Anfahrphase ist eine Bypassleitung 6 über zwei Drei-Wege-Ventile 7 und 8 einschaltbar, die die Eintritts- und Austrittsseite des Separators 5 unter Einbeziehung des Vorwärmers 4 und Rekuperativ-Wärmetauschers 3 verbindet. Somit wird bei Beginn der Separierung ein Kreis gebildet und nur die kleine in diesem Kreis befindliche Ölmenge auf Separationstemperatur erwärmt. Ist die entsprechende Temperatur erreicht, wird über die Drei-Wege-Ventile 7,8 umgeschaltet, und es wird der gesamte Kreislauf durchlaufen.

**Ansprüche**

1. Vorrichtung zur Separierung von Schmieröl für Motoranlagen relativ großer Leistung, wobei ein Separator parallel zum Motor angeordnet und das Schmieröl aus einem Umlauftank über einen Vorwärmer zur Einstellung einer Separationstemperatur dem Separator und anschließend dem Umlauftank wieder zuführbar ist, dadurch gekennzeichnet, daß dem Vorwärmer (4) ein Rekuperativ-Wärmetauscher (3) vorgeschaltet ist, der durch das erwärmte separierte Schmieröl nach Durchlauf durch den Separator (5) und vor Rückführung in den Umlauftank (1) betreibbar ist.

2. Vorrichtung nach Anspruch I, dadurch gekennzeichnet, daß die Eintritts- und Austrittsseite des Separators (5) unter Einbeziehung mindestens des Vorwärmers (4) über eine Bypassleitung (6) mittels Drei-Wege-Ventile (7,8) als geschlossener Kreis zur Aufwärmung auf Separationstemperatur abtrennbar ist.

3. Vorrichtung nach Anspruch 1 oder 2, dadurch gekennzeichnet, daß der Vorwärmer (4) als elektrisch betriebener Erhitzer ausgebildet ist.

4. Vorrichtung nach Anspruch 1 oder 2, dadurch gekennzeichnet, daß der Vorwärmer (4) als dampfbeheizter Erhitzer ausgebildet ist.

5. Vorrichtung nach Anspruch 1 oder 2, dadurch gekennzeichnet, daß der Vorwärmer (4) als thermalölbeheizter Erhitzer ausgebildet ist.

6. Vorrichtung nach Anspruch 1 oder 2, dadurch gekennzeichnet, daß der Vorwärmer (4) als heißwasserbeheizter Erhitzer ausgebildet ist.

20°C min
70°C max

ca 60°C

VERBLOCKT

90°C    98°C

65°C    95°C

SLUDGE

TEMPERATURABHAENGIG UMSCHALTENDE 3-WEGE ARMATUREN:
ANWAERMBETRIEB: 2/3
SEPARIERBETRIEB: 1/2